Europäisches Patentamt

European Patent Office

Office européen des brevets

(19)

(11) **EP 0 483 026 B1**

(12) **FASCICULE DE BREVET EUROPEEN**

(45) Date de publication et mention
de la délivrance du brevet:
**22.01.1997 Bulletin 1997/04**

(51) Int Cl.[6]: **G01N 23/205**, G01N 23/207

(21) Numéro de dépôt: **91420373.2**

(22) Date de dépôt: **21.10.1991**

(54) **Procédé d'analyse aux rayons X de pièces monocristallines**

Röntgenanalyseverfahren für einkristalline Erzeugnisse

X-ray analysis method for single crystal objects

(84) Etats contractants désignés:
**BE DE ES FR GB IT NL**

(30) Priorité: **23.10.1990 FR 9013330**

(43) Date de publication de la demande:
**29.04.1992 Bulletin 1992/18**

(73) Titulaires:
- **CENTRE NATIONAL DE
  LA RECHERCHE SCIENTIFIQUE (CNRS)
  75700 Paris Cedex 07 (FR)**
- **INSTITUT MAX VON LAUE - PAUL LANGEVIN
  F-38042 Grenoble cédex (FR)**

(72) Inventeurs:
- **Bastie, Pierre
  F-38700 Corenc (FR)**
- **Hamelin, Bernard
  F-38170 Seyssinet (FR)**

(74) Mandataire: **de Beaumont, Michel
1bis, rue Champollion
38000 Grenoble (FR)**

(56) Documents cités:
**CH-A- 488 180**

- **PHYSICA STATUS SOLIDI A. vol. 62, no. 2,
  décembre 1980, BERLIN DDR pages 431 - 440;
  V.V. ARISTOV ET AL: "Role of entrance slit in the
  x-ray section topography of single crystals"**
- **INDUSTRIAL LABORATORY. vol. 45, no. 6, juin
  1979, NEW YORK US pages 676 - 677; L.G.
  SHABEL'NIKOV: "Topographic x-ray camera"**
- **JAPANESE JOURNAL OF APPLIED PHYSICS.
  vol. 27, no. 7, juillet 1988, TOKYO JP pages
  1331-1334; T. KOJIMA ET AL: "X-ray diffraction
  microscopy by an electronic streak camera
  system"**

## Description

La présente invention concerne un procédé d'analyse volumique de la qualité cristallographique de pièces monocristallines, par des rayons X de haute énergie.

Le problème se pose en particulier dans l'analyse d'aubes de turbine monocristallines, qui subissent des contraintes très élevées et doivent donc être exemptes de défauts.

Il se pose également dans le domaine de la croissance cristalline (industrie électronique, recherche,...) où il serait souhaitable de pouvoir contrôler, en temps réel et au travers des parois du four, la qualité des matériaux en cours de croissance.

Les divers procédés connus d'analyse aux rayons X de tels matériaux ne fournissent que des informations de surface et souvent ponctuelles. En outre, les procédés volumiques actuels utilisent des diffractomètres nécessitant l'emploi de rayonnement monochromatique souvent difficile à utiliser en milieu industriel (sources radioactives, rayonnement synchrotron...).

On connaît aussi des procédés utilisant des sources de très faible étendue spectrale. Voir Physica Status Solidi A., Volume 62, N° 2, décembre 1980, Berlin DDR, pages 431-440, V.V. Aristov et al.

Un objet de la présente invention est de prévoir un procédé, utilisable en milieu industriel, permettant d'analyser un échantillon monocristallin en un temps minimum et avec un minimum de manipulations.

La présente invention fait utilisation de l'effet connu de refocalisation d'un faisceau de rayons X polychromatique éclairant une surface monocristalline.

Plus particulièrement, la présente invention prévoit un procédé d'analyse volumique par rayons X des défauts cristallins d'une pièce tel que mentionné en revendication 1.

Selon un mode de réalisation de la présente invention, le faisceau est issu d'un foyer ponctuel et est diaphragmé par une fente placée entre la source de rayons X et la pièce.

Selon un mode de réalisation de la présente invention, le générateur de rayons X est une source de rayonnement d'énergie supérieure ou égale à 100 keV, à large étendue spectrale.

Selon un mode de réalisation de la présente invention, la pièce est un monocristal, par exemple une aube de turbine.

Grâce à ce procédé, il est possible :

- de déterminer directement si l'ensemble de la structure éclairée est monocristallin ou non ;
- de définir l'orientation des axes cristallographiques ;
- de quantifier la qualité du cristal ("mosaïcité") ;
- de localiser et visualiser les éventuels défauts cristallins ;
- de visualiser des défauts purement structurels (manque de matière, bulles,...) par observation du faisceau non diffracté (radiographie) ;
- d'obtenir un grandissement variable des images observées.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1 représente le spectre de rayons X d'une source de rayons X utilisée selon la présente invention ;
la figure 2a est un schéma du montage d'analyse aux rayons X selon la présente invention ;
la figure 2b est une vue en projection du montage de la figure 2a ;
la figure 3 explicite les notations relatives à la diffraction des rayons X dans la pièce monocristalline ; et
les figures 4a, 4b et 4c illustrent des exemples d'observations effectuées avec le montage selon la présente invention et relatifs à différents défauts cristallins.

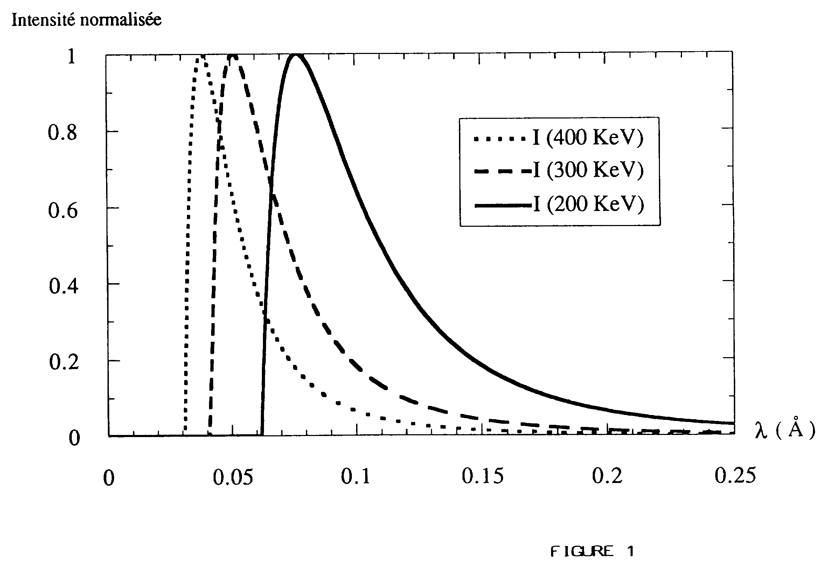

La présente invention utilise un générateur de rayons X haute énergie (100 - 500 keV) à micro foyer, dont le spectre est essentiellement constitué du rayonnement de freinage. Ces générateurs sont utilisés couramment depuis quelques années pour des applications de radiographie. Le spectre normalisé de tels générateurs est illustré en figure 1 dans laquelle les ordonnées correspondent à l'intensité normalisée, et les abscisses à la longueur d'onde en Angströms (1 Å = 0,1 nm).

En figure 1, les courbes 1, 2 et 3 correspondent respectivement à des hautes tensions E du générateur de 400, 300 et 200 keV. Comme cela est connu, la longueur d'onde de coupure $\lambda_m$ (longueur d'onde minimale ou énergie maximale) vaut $\lambda_m = 12,4/E$, E étant exprimé en keV. La plage des longueurs d'onde émises varie donc approximativement (largeur à mi hauteur ) de 0,03 à 0,06 Å pour une énergie de 400 keV et de 0,07 à 0,12 Å pour une énergie de 200 keV.

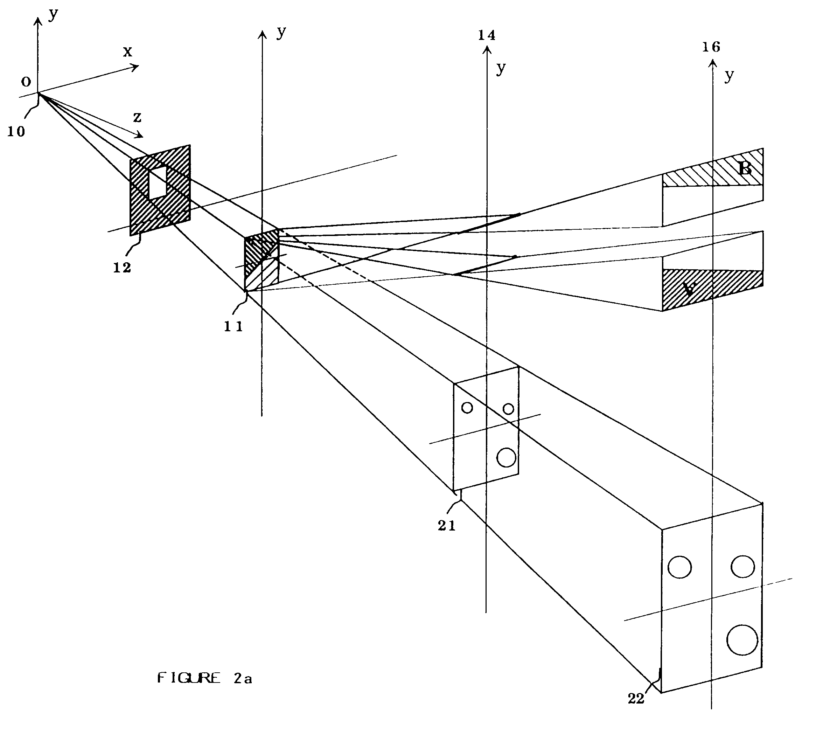

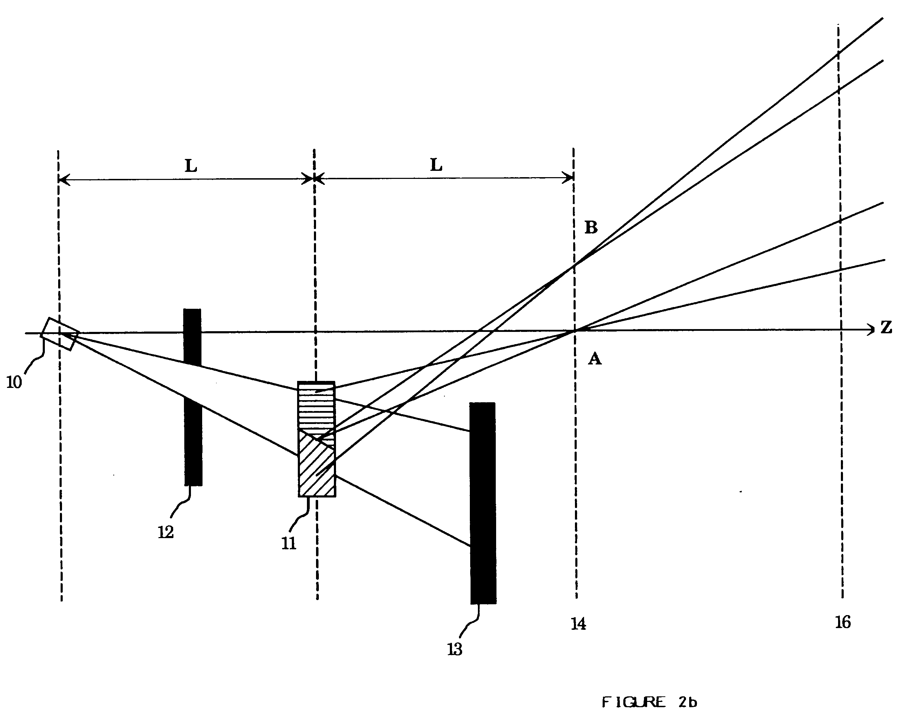

Les figures 2a et 2b illustrent schématiquement, respectivement en perspective et en projection, un montage selon la présente invention utilisant un générateur de rayons X 10 du type décrit précédemment. On a tracé à l'emplacement de ce générateur un référentiel Oxyz, la direction Oz correspondant sensiblement à la direction de propagation et étant plus clairement définie en figure 2b. La pièce à analyser 11 s'étend perpendiculairement au plan de la figure 2b (zOy) et est placée à mi-distance du foyer du générateur et d'un plan 14 dit de "focalisation". Un diaphragme 12, à ouverture verticale et horizontale, définit une surface éclairée maximale compatible avec les lois physiques de la diffraction (énergie du générateur, distance générateur-pièce, dimensions de la pièce...). La surface ainsi analysée peut atteindre plusieurs cm$^2$.

L'observation s'effectue à l'aide d'une caméra (ou autre détecteur) placée généralement dans le plan de focalisation à une distance 2L du foyer du générateur.

Les distances L susmentionnées seront choisies en fonction des problèmes considérés et pourront, par exemple, être comprises entre 50 cm et 2 m ; ces valeurs constituent un ordre de grandeur et ne sont pas restrictives.

On peut utiliser un écran 13, tel que représenté en figure 2b, pour bloquer les rayons X traversant la pièce sans déviation. En l'absence de cet écran, on pourra observer le rayonnement direct dans la zone 21 ou 22 pour déterminer si la pièce présente des défauts de structure tels que des bulles (représentées par des cercles en figure 2a).

L'observation et l'analyse immédiate du rayonnement diffracté s'effectuent principalement avec une caméra rayons X ; cependant une analyse plus fine pourra être faite si nécessaire en plaçant un détecteur de rayons X (mono ou bi dimensionnel) dans le plan de focalisation. Un déplacement de ce détecteur selon l'axe y, en association avec une analyse de profil d'intensité, fournira des informations précises sur les paramètres de désorientation et de mosaïcité.

Dans ce qui précède, on a essentiellement exposé ce qui se passait dans le plan focal 14 que l'on a considéré comme étant le plan d'observation.

Il sera clair pour l'homme de l'art que l'observation peut se faire dans un plan 16, appelé plan image, plus éloigné de la pièce. Dans ce plan se reforme une image associée à chacun des défauts cristallins de la pièce.

Si la pièce présente effectivement plusieurs grains cristallographiquement désorientés, il y aura formation d'autant d'images que de grains.

Ces images peuvent éventuellement se superposer. L'utilisation d'un diaphragme (non représenté) placé dans le plan focal permet de les isoler par sélection des lignes de diffraction associées.

Chaque image représente une vue par transmission de la zone cristalline diffractante ; cette vue présente une déformation due à des coefficients de grandissement différents :

le grandissement parallèlement à l'axe ox vaut :

$$G_{ox} = d_{image}/L,$$

le grandissement parallèlement à l'axe oy vaut :

$$G_{oy} = (d_{image} - 2L)/L,$$

où

$d_{image}=$ distance "plan image"-foyer du générateur, et

$L =$ distance pièce-foyer du générateur.

Cette déformation géométrique pourra être corrigée par un traitement d'image.

Si la pièce 11 est monocristalline et qu'il existe un réseau de plans cristallins orientés satisfaisant la relation de Bragg pour un ensemble de longueurs d'onde parmi les longueurs d'onde émises dans le spectre, alors l'ensemble de la zone cristalline considérée diffractera un rayonnement qui se refocalisera en une ligne unique A située dans le plan de focalisation 14.

Si la pièce est parfaitement monocristalline, et seulement dans le cas où le générateur de rayons X présente un foyer effectivement ponctuel, on obtiendra dans le plan 14, une image en forme de fine ligne.

La longueur de cette ligne est définie par le double de la dimension de la partie éclairée de la pièce selon Ox ; sa largeur est égale à la dimension du foyer (quelques dizièmes de mm) lorsque la pièce est de faible épaisseur (< 1cm).

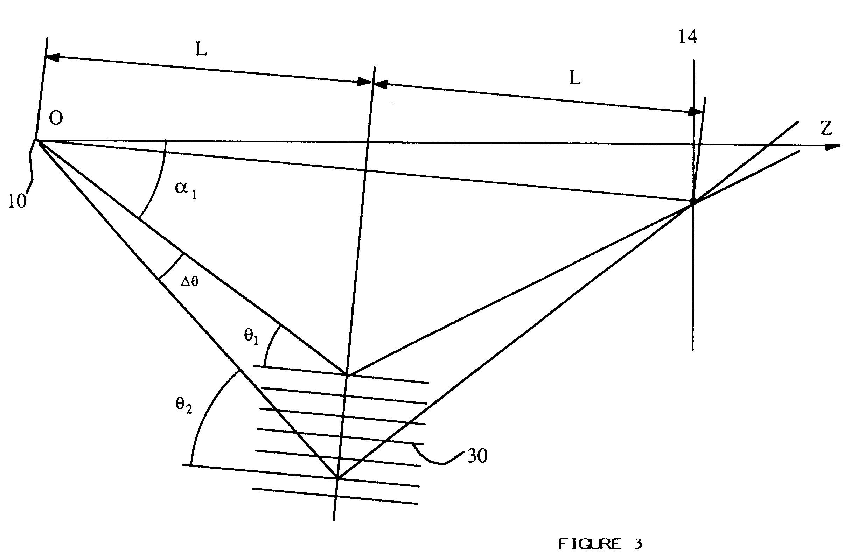

Dans ce qui précède, on a supposé que l'étendue spectrale de la source était suffisante pour que chaque plan réticulaire concerné se trouve dans la condition de Bragg par rapport à l'une des longueurs d'onde émises par la source. L'homme de l'art notera que ceci implique que des conditions soient satisfaites quant à la relation entre l'étendue spectrale $\Delta\lambda$ de la source, les angles de Bragg $\theta$, et l'ouverture du faisceau émis par le générateur. Ces relations seront explicitées en relation avec la figure 3.

En figure 3, on suppose que la pièce à analyser a préalablement été pré-orientée pour que ses plans réticulaires 30 diffractent le faisceau sensiblement au centre du détecteur.

Le trièdre de référence Oxyz sera donc orienté pour que l'axe Oz passe par le centre du détecteur.

$\Delta\theta$ est l'ouverture du faisceau éclairant la pièce 11 à partir du générateur de rayons X ;

$\theta_1$ est l'angle de Bragg coorrespondant à une extrémité de la surface éclairée de la pièce et $\theta_2$ l'angle de Bragg correspondant à l'autre extrémité.

Dans l'hypothèse d'une pré-orientation du cristal (faisceau diffracté sensiblement au centre du détecteur) alors l'angle $\alpha_1$ entre le rayon incident minimum et l'axe Oz est sensiblement égal à $\theta_1$.

Pour qu'il y ait diffraction, il faut que le générateur produise un faisceau de rayons X de largeur spectrale suffisante pour que la relation de Bragg $\lambda = 2 \cdot d \cdot \sin\theta$ entre la longueur d'onde $\lambda$ du rayonnement X, l'angle $\theta$ et le paramètre de maille d soit satisfaite pour tout angle $\theta$ compris entre $\theta_1$ et $\theta_2$.

Cette largeur spectrale peut être obtenue par dérivation de la relation de Bragg :

$$\Delta\lambda = 2d\cdot\Delta\theta\cdot\cos\theta.$$

Compte-tenu des énergies utilisées, les angles $\theta$ sont petits ; $\cos\theta$ est donc sensiblelement égal à 1 et l'étendue spectrale de la source $\Delta\lambda$ doit satisfaire la relation :

$$\Delta\lambda = 2d(\theta_2 - \theta_1).$$

En pratique, les distances réticulaires sont généralement comprises entre 1 et 3 Angströms (0,1 et 0,3 nm). Pour $d = 2\text{Å}$, ceci conduit à la relation $\Delta\lambda$ (Å) $= 4\Delta\theta$ (radians). Si l'on appelle $x_0$ la largeur de la pièce et L la distance entre le générateur et la pièce, pour une valeur de $x_0$ de 3 cm et une valeur de L de 200 cm, il faudra que dans ce cas particulier, l'étendue spectrale de la source $\Delta\lambda$ soit égale à : $\Delta\lambda = 4 \times 3/200 = 0,06$ Å, ce qui est compatible avec les étendues spectrales considérées en figure 1.

Il faut noter que la présente invention permet de faire varier $\lambda$ et $\Delta\lambda$ de façon particulièrement simple en modifiant la valeur de la haute tension du générateur (cf figure 1). On peut également choisir la longueur d'onde moyenne utilisée en translatant la pièce parallèlement à l'axe Oy (changement des valeurs des angles $\theta$).

Les images sont obtenues en convertissant le rayonnement X en une image optique visible par une caméra à rayons X munie d'un intensificateur d'image ou par un détecteur bidimensionnel. La détection doit avoir une très bonne résolution spatiale (<0,5 mm), une sensibilité élevée, et une bonne homogénéité de réponse sur l'ensemble de la surface du détecteur ; sa surface active devra être de plusieurs dizaines de cm$^2$.

Les figures 2a et 2b illustrent par des hachures que la pièce 11 comprend deux zones cristallographiquement distinctes. Il en résulte que deux images A et B se forment dans le plan focal 14.

Un exemple plus détaillé de différents défauts qu'il est possible de rencontrer est illustré par les figures 4a à 4c dans chacune desquelles la partie gauche représente la structure étudiée et la partie droite représente l'image observée correspondante dans le plan de focalisation.

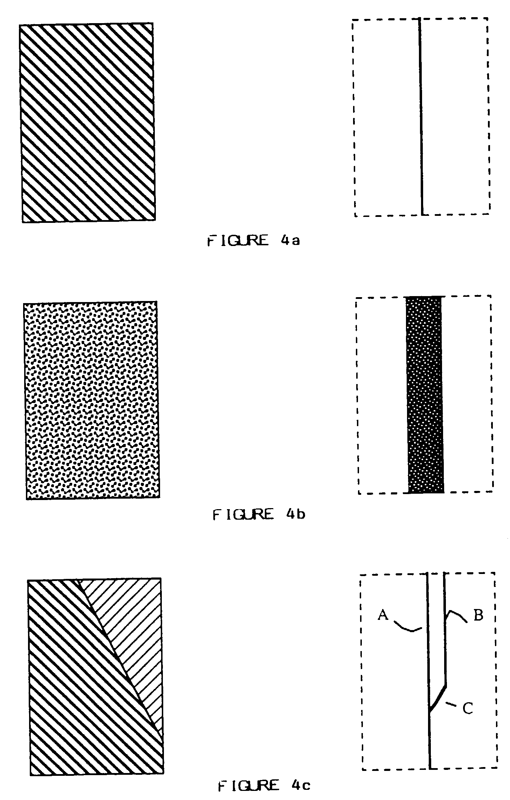

En figure 4a, la pièce est un cristal parfait ;
En figure 4b, le cristal est de type "mosaïque" homogène ;
En figure 4c, le cristal présente deux grains légèrement désorientés ; la distance entre les deux lignes A et B permet de calculer la désorientation des grains. Si le changement d'orientation n'est pas brutal, il apparaît une zone de transition C entre les lignes A et B.

## Revendications

1. Procédé d'analyse volumique par rayons X des défauts cristallins d'une pièce (11), caractérisé en ce qu'il comprend les étapes suivantes :

positionner la pièce dans un plan situé à égale distance du foyer d'une source de rayons X et d'un plan de focalisation (14) ;
illuminer la pièce à partir d'une source ponctuelle de rayons X (10) par un faisceau

. d'étendue spectrale à mi-hauteur $\Delta\lambda$ telle que le rapport entre l'étendue spectrale et la longueur d'onde pour l'intensité maximum soit supérieur à environ 0,5,
. de longueur d'onde $\lambda$ comprise dans une plage d'environ 0,03 à 0,12 Å, et
. d'ouverture angulaire déterminée $\Delta\theta$, l'ouverture $\Delta\theta$ du faisceau étant fixée par $\Delta\theta \leq \Delta\lambda/2d\cdot\cos\theta$, d étant la distance interréticulaire pour les plans réticulaires considérés ;

orienter la pièce (11) pour obtenir la diffraction sur une famille de plans réticulaires (30) choisie ; et
recueillir et analyser le faisceau de rayons X au voisinage du plan de focalisation.

2. Procédé selon la revendication 1, caractérisé en ce que l'analyse de l'image comprend les étapes consistant à :

- isoler par des diaphragmes les taches lumineuses observées dans le plan de focalisation ;
- recueillir et analyser les images transmises au-delà du plan de focalisation.

3. Procédé selon la revendication 1, caractérisé par l'utilisation d'un faisceau divergent issu d'un foyer ponctuel et diaphragmé par une ouverture placée entre la source de rayons X et la pièce de sorte que le faisceau illumine sensiblement l'ensemble de la pièce.

4. Procédé selon la revendication 1, caractérisé en ce que le générateur de rayons X est une source de rayonnement d'énergie supérieure ou égale à 100 keV, à large étendue spectrale.

5. Procédé selon la revendication 1, caractérisé en ce que la pièce est un monocristal, par exemple une aube de turbine.

## Patentansprüche

1. Röntgenstrahl-Volumenanalyse-Verfahren für Kristalldefekte eines Teils bzw. Stücks (11), dadurch gekennzeichnet, daß das Verfahren die folgenden Schritte aufweist:

Anordnen des Teils in einer Ebene, die sich in gleichem Abstand von dem Brennpunkt einer Röntgenstrahlquelle und einer Brenn- bzw. Fokussierebene (14) befindet;
Beleuchten bzw. Bestrahlen des Teils von einer punktförmigen Röntgenstrahlquelle (10) aus durch einen Strahl mit den folgenden Eigenschaften:

- eine Halbwert-Spektralbreite $\Delta\lambda$, so daß das Verhältnis zwischen der Spektralbreite und der Wellenlänge für die maximale Intensität größer als ungefähr 0,5 ist,
- eine Wellenlänge $\lambda$ im Bereich von ungefähr 0,03 bis 0,12 Å, und
- eine bestimmte Winkelöffnung $\Delta\theta$, wobei die Öffnung bzw. Spreizung $\Delta\theta$ des Strahls bestimmt ist durch $\Delta\theta \leq \Delta\lambda/2d\cdot\cos\theta$, wobei d der Interretikular- bzw. Gitterabstand für die betrachteten Retikular- bzw. Gitterebenen ist;

Orientieren des Teils (11), um eine Beugung an einer ausgewählten Schar von Retikular- bzw. Gitterebenen (30) zu erhalten; und
Sammeln und Analysieren des Röntgenstrahls nahe der Brenn- bzw. Fokussierebene.

2. Verfahren gemäß Anspruch 1, dadurch gekennzeichnet, daß die Analyse des Bildes die folgenden Schritte aufweist:

- Isolieren der beobachteten Punkte in der Brenn- bzw. Fokussierebene durch Blenden;
- Sammeln und Analysieren der über die Brenn- bzw. Fokussierebene hinaus übertragenen Bilder.

3. Verfahren gemäß Anspruch 1, gekennzeichnet durch die Verwendung eines divergierenden Strahls ausgehend von einem Brennpunkt und begrenzt bzw. abgeblendet durch eine Öffnung zwischen der Röntgenstrahlquelle und dem Teil, so daß der Strahl im wesentlichen das gesamte Teil beleuchtet bzw. bestrahlt.

4. Verfahren gemäß Anspruch 1, dadurch gekennzeichnet, daß der Röntgenstrahlgenerator eine Strahlungsquelle mit einer Energie von größer oder gleich 100 keV und mit einer großen Spektralbreite bzw. einem breiten Spektrum ist.

5. Verfahren gemäß Anspruch 1, dadurch gekennzeichnet, daß das Teil ein Monokristall ist, beispielsweise eine Turbinenschaufel.

## Claims

1. An X-ray volume analysis method of crystalline defects of a part (11), characterized in that it comprises the steps of:

positioning the part in a plane situated at equal distance from the focus of an X-ray source and a focusing plane (14);
illuminating the part from a punctual X-ray source (10) by a beam having:

- a large spectral width $\Delta\lambda$ such that the ratio between the spectral width and the wavelength for the maximum intensity is higher than about 0.5,
- a wavelenlength $\lambda$ within the range extending from about 0.03 to 0.12 angströms, and
- a determined angular opening $\Delta\theta$, the opening $\Delta\theta$ of the beam being fixed by $\Delta\theta \leq \Delta\lambda/2d\cdot\cos\theta$, d being the interreticular distance for the considered reticular planes;

orienting the part (11) to obtain the diffraction on a chosen family of reticular planes (30); and collecting and analyzing the X-ray beam near the focusing plane.

2. A method as claimed in claim 1, characterized in that the analysis of the image comprises the steps of:

- isolating by diaphragms the observed spots in the focusing plane;
- collecting and analyzing the images transmitted beyond the focusing plane.

3. A method as claimed in claim 1, characterized by the use of a diverging beam coming from a punctual focus and diaphragmed by an opening placed between the X-ray source and the part so that the beam substantially illuminates the whole part.

4. A method as claimed in claim 1, characterized in that the X-ray generator is a source providing a radiation of an energy higher than or equal to 100 keV, having a large spectral width.

5. A method as claimed in claim 1, characterized in that the part is a monocrystal, for example a turbine blade.

Intensité normalisée

FIGURE 1

EP 0 483 026 B1

FIGURE 2a

FIGURE 2b

FIGURE 3

FIGURE 4a

FIGURE 4b

FIGURE 4c